# EUROPEAN PATENT SPECIFICATION

(11) **EP 2 532 503 B1**
(45) Date of publication and mention of the grant of the patent: **25.11.2015**
(21) Application number: 11739889.1
(22) Date of filing: 04.02.2011
(51) Int. Cl.: B29C 43/46, B29D 30/28, B29D 30/30, B29D 30/06, B29K 21/00, B29L 7/00, B29L 30/00, B29C 43/22

(54) **PRODUCTION DEVICE OF A WINDING MEMBER OF A RUBBER BAND BODY AND PRODUCTION METHOD OF A WINDING MEMBER OF A RUBBER BAND BODY**
VORRICHTUNG ZUR HERSTELLUNG EINES GEWUNDENEN ELEMENTS EINES GUMMIBANDKÖRPERS UND VERFAHREN ZUR HERSTELLUNG EINES GEWUNDENEN ELEMENTS EINES GUMMIBANDKÖRPERS
DISPOSITIF DE PRODUCTION D'UN ÉLÉMENT ENROULÉ D'UNE BANDE ÉLASTIQUE ET PROCÉDÉ DE PRODUCTION D'UN ÉLÉMENT ENROULÉ D'UNE BANDE ÉLASTIQUE

(30) Priority: 04.02.2010 JP 2010023511
(43) Date of publication of application: 12.12.2012
(73) Proprietor: Bridgestone Corporation, Tokyo 104-8340 (JP)
(72) Inventor: IYANAGI Satoshi, Kodaira-shi Tokyo 187-8531 (JP); FUJIWARA Masaoki, Kodaira-shi Tokyo 187-8531 (JP)
(74) Representative: Oxley, Robin John George
(86) International application number: PCT/JP2011/052427
(87) International publication number: WO 2011/096541

(56) References cited:
- EP-A1- 1 486 320
- WO-A1-2009/037736
- JP-A- 2000 108 222
- JP-A- 2001 328 180
- JP-A- 2003 320 543
- JP-A- 2004 216 726
- JP-A- 2004 261 963

## Description

### Technical Field

The present invention relates to a production device of a winding member of a rubber band body and a production method of a winding member of a rubber band body.

Priority is claimed on Japanese Patent Application No. 2010-023511, filed February 4, 2010, the content of which is incorporated herein by reference.

### Background Art

In the related art, as a production device of a rubber band body of this type, a configuration is known which includes an extruder, a pair of rollers rolling a rubber member from the extruder between rolling areas of rollers to form a rubber band body, as disclosed in Patent Document 1 and Patent Document 2 described below.

### Citation List

### Patent Document

[Patent Document 1] Japanese Unexamined Patent Application, First Publication No. 2006-130757
[Patent Document 2] Japanese Unexamined Patent Application, First Publication No. 2004-216726

Reference is also made to JP 2004-216726 which discloses a production device of a winding member of a rubber band body according to the preamble of Claim 1, and also to JP 2001-328180, JP 2003-320543 and EP-A-1486320.

### Summary of Invention

### Technical Problem

However, in the production device of the rubber band body in the related art described above, for example, when the rotation speed of the rollers is increased in order to improve production efficiency, the rolling of the rubber member is insufficient and for example, both ends of the rubber band body are rippled and both ends may be cut.

For example, when a tire configuration member is formed with the rubber band body, it is difficult to form the tire configuration member with high accuracy and it is possible that air remains in the tire configuration member.

The invention is made in view of the problems described above, and an object of the invention is to provide a production device of a winding member of a rubber band body and a production method of a winding member of a rubber band body, in which the rubber band body can be formed with high accuracy even though the rotation speed of rollers is increased.

### Solution to Problem

In order to solve the problem described above, the invention suggests a device described below.

A production device of a rubber band body according to an aspect of the invention comprises: an extruder; and a pair of rollers for rolling a rubber member from the extruder between rolling areas of rollers to form a rubber band body, wherein a rolling area of at least one of the pair of rollers is configured by a circumferential groove formed in the outer surface of the roller and the circumferential groove extends over the whole circumference of the roller, a molding drum which is rotatably supported for winding the rubber band body on the outer periphery surface side thereof for forming a winding member of the rubber band body, and the pair of rollers is configured by a first roller and a second roller, the first roller is arranged between the second roller and the molding drum, characterized in that the circumferential groove is formed in the outer surface of the first roller and extending over the whole circumference of the first roller.

The present invention further provides a production method of a winding member of the rubber band body comprising rolling a rubber member which is extruded from an extruder to form a rubber band body; and forming the rubber band body using the production device of a winding member of the rubber band body according to the invention.
In addition, the present invention further provides a production method of a rubber band body comprising: forming a winding member of a rubber band body by winding the rubber band body on the outer periphery surface side of a molding drum after rolling a rubber member extruded from an extruder and forming the rubber band body; and forming the winding member of the rubber band body using the production device of a winding member of a rubber band body according to the invention.

According to an aspect of the invention described above, a rolling area of at least one of the pair of rollers is configured by the circumferential groove so that the rubber member is pushed to the side wall surface which is positioned at both ends in the roller shaft direction in the wall surfaces defining the circumferential groove during rolling of the rubber member. Accordingly, widening and deforming of the rubber member in the roller shaft direction can be suppressed. Thus, during rolling, the rubber member is prevented from protruding to the non-rolling areas positioned outside further than the rolling area in the roller shaft direction in the pair of rollers and the rubber member can be effectively rolled. Accordingly, even though the rotation speed of the rollers is increased, the rubber band body can be formed with high accuracy.

In addition, when the rotation speed of the rollers is increased, the rubber member is pulled and extended largely between the extruder and the rollers, and the cross-sectional area of the rubber member along the width direction can be decreased largely. Accordingly, an opening area of the mouthpiece of the extruder can be increased as much as the cross-sectional area is decreased by the extension of the rubber member and pressure or temperature in the extruder can be decreased. Accordingly, an improvement in the service life of the extruder or a reduction in the maintenance frequency can be achieved.

In addition, in a case where the gap between the connection portions in the non-rolling areas and the rolling area in between the pair of rollers is for example, 0.05 mm to 0.2 mm, preferably 0.05 mm to 0.1 mm, rollers can be smoothly rotated while the rubber member is reliably prevented from protruding to the non-rolling areas on the outside surface of the rollers.

In other words, in a case where the gap is smaller than 0.05 mm, the rollers excessively approach each other and it is possible that the rollers cannot be smoothly rotated. In addition, in a case where the gap is larger than 0.2 mm, it is possible that the rubber member is protruded to the non-rolling areas on the outside surface of the rollers.

In addition, in the production device of a rubber band body according to an aspect of the invention, a side wall surface which is positioned at both ends in a roller shaft direction, among wall surfaces defining the circumferential groove, may gradually extend from inside to outside of the circumferential groove along the roller shaft direction, from a bottom wall surface side towards an opening side of the circumferential groove.

In this case, the side wall surface gradually extends from the inside to the outside of the circumferential groove along the roller shaft direction, proceeding from the bottom wall surface side towards the opening side of the circumferential groove so that the depth of the circumferential groove in both ends in the roller shaft direction is gradually decreased proceeding from the inside to the outside of the circumferential groove along the roller shaft direction. Accordingly, the thickness of both ends of the circumferential groove in the width direction is gradually decreased proceeding outside in the width direction, and the rubber band body without steps can be formed at both ends.

In addition, for example, in a case where the rubber band body formed as described above is wound spirally on the outer periphery surface side of the molding drum while overlapping a portion thereof in the width direction so that the tire configuration member is formed, the tire configuration member can be formed with high accuracy.

In other words, the rubber band body is configured such that the thickness of both ends in the width direction is gradually decreased proceeding outside in the width direction and both ends are formed without steps. Thus, the rubber band body is overlapped while moving in the width direction so that one end of the rubber band body in the width direction configures the surface of the tire configuration member. Accordingly, the step can be suppressed from generating on the surface of the tire configuration member for example, compared to a case where the thickness of the rubber band body is constant regardless of the positions in the width direction or to a case where the step is present at the end portion of the rubber band body in the width direction. Thus, the tire is formed with the tire configuration member formed with high accuracy so that air remaining in the tire can be reliably suppressed.

In addition, in the production device of a rubber band body according to an aspect of the invention, engaging portions may be further included in the pair of rollers separately, which engage each other and regulate a movement of the rollers along the roller shaft direction.

In this case, the engaging portions are included in the pair of rollers separately, so that it is possible to regulate that the pair of rollers is moved in the roller shaft direction during rolling of the rubber member, and the advantage described above can be reliably obtained.

A production device of a winding member of a rubber band body of an aspect of the invention includes a molding drum which is rotatably supported and where the rubber band body is wound on the outer periphery surface side thereof and a winding member of the rubber band body is formed.

According to the aspect of the invention, the production device of the rubber band body according to the aspect of the invention is included so that even though the rotation speed of the rollers is increased, the rubber band body can be formed with high accuracy and the winding member of the rubber band body can be formed with high accuracy.

In addition, like after a size change, even though the rubber member is extruded from the extruder at the initial start of the production of the rubber band body and is not pulled by molding drum, the rubber member is pushed to the side wall surface during rolling. Accordingly, widening and deforming of the rubber member in the roller shaft direction can be suppressed.

In addition, in the production device of a winding member of a rubber band body according to the aspect of the invention, one roller in the pair of rollers may be arranged between the other roller and the molding drum to push and wind the rubber band body on the outer periphery surface side of the molding drum, and the rolling area of one roller includes an arc surface portion of which a shape in a vertical cross-sectional view along the roller shaft direction is convex towards the outside of one roller in the diameter direction.

In this case, the rolling area of one roller includes the arc surface portion, so that the rubber band body on the rolling area of the one roller can be firmly pushed and wound on the outer periphery surface side of the molding drum by the arc surface portion. Accordingly, even though the air enters between the rubber band body and the outer periphery surface side of the molding drum, the rubber band body can be wound on the outer periphery surface side of the molding drum while the air is reliably removed.

In addition, in the production device of a winding member of a rubber band body according to the aspect of the invention, the pair of rollers and the molding drum may be arranged to be movable in the roller shaft direction, and the rubber band body be wound spirally on the outer periphery surface side of the molding drum while overlapping a portion thereof in the width direction to form a tire configuration member.

According to the aspect of the invention, the production device of the rubber band body according to the aspect of the invention described above is included, even though the rotation speed of the rollers is increased, the rubber band body can be formed with high accuracy so that the tire configuration member can be formed with high accuracy and air remaining in the tire configuration member can be suppressed.

### Advantageous Effects of Invention

According to the aspect of the invention, even though the rotation speed of the rollers is increased, the rubber band body can be formed with high accuracy.

### Brief Description of Drawings

FIG. 1 is a schematic configuration view illustrating a production device of a tire configuration member according to an embodiment of the invention.
FIG. 2 is a vertical cross-sectional view illustrating a pair of rollers configuring the production device of the tire configuration member shown in FIG. 1 along a roller shaft direction.
FIG. 3 is a view illustrating a state where the tire configuration member is formed in the production device of the tire configuration member shown in FIG. 1.
FIG. 4 is a modification example of a pair of rollers configuring the production device of the tire configuration member according to an embodiment of the invention.
FIG. 5 is a modification example of a pair of rollers configuring the production device of the tire configuration member according to an embodiment of the invention.
FIG. 6 is a modification example of a pair of rollers configuring the production device of the tire configuration member according to an embodiment of the invention.
FIG. 7 is a modification example of a pair of rollers configuring the production device of the tire configuration member according to an embodiment of the invention.

### Description of Embodiments

Hereinafter, a production device (a production device of a winding member of a rubber band body) of a tire configuration member according to an embodiment of the invention is described with reference to drawings. In addition, the tire configuration member (the winding member of the rubber band body), for example, includes an inner liner member, a side wall member, a tread member, or the like.

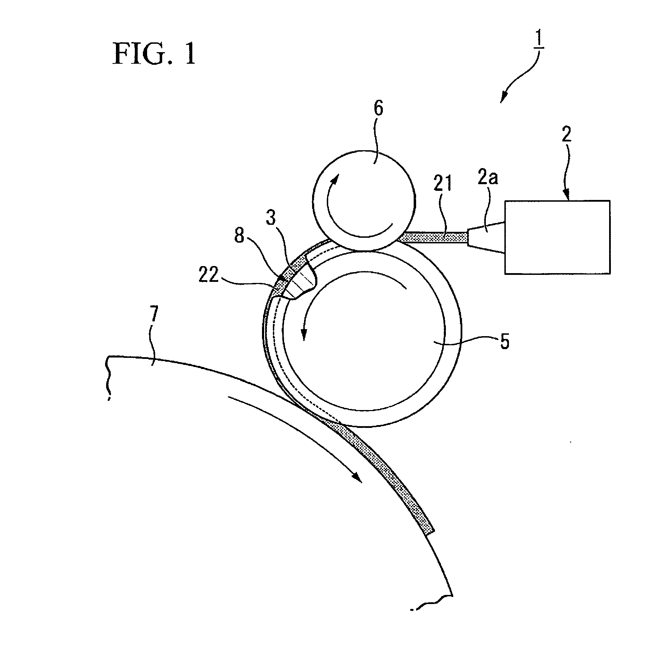

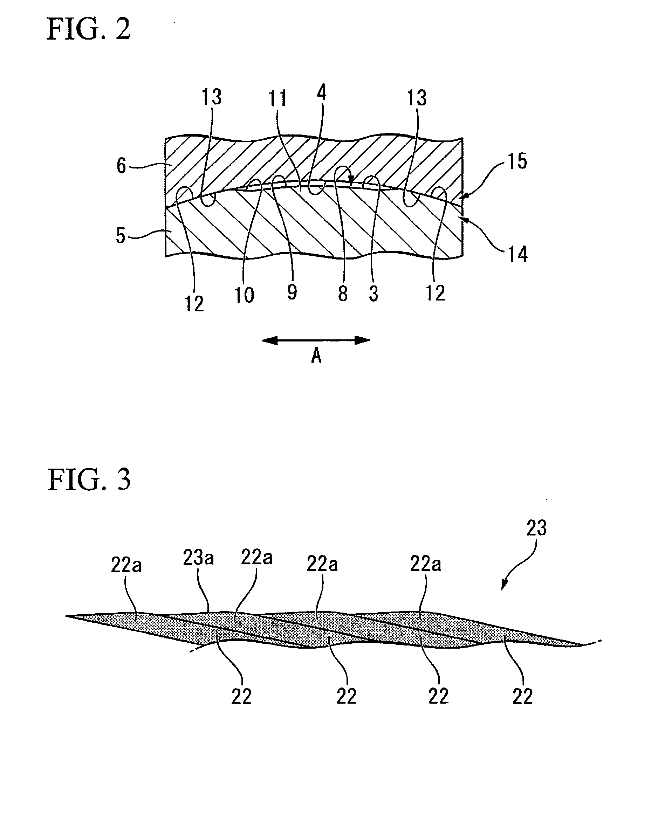

As shown in FIG. 1, a production device 1 of a tire configuration member includes an extruder 2 extruding an unvulcanized band-shaped rubber member 21 from a mouthpiece 2a, a pair of rollers 5 and 6 rolling the rubber member 21 from the extruder 2 between rolling areas 3 and 4 (see, FIG. 2) respectively and forming a rubber band body 22, and a molding drum (a wound roller) 7 which is rotatably supported and where the rubber band body 22 is wound on an outer periphery surface side thereof and the tire configuration member 23 (see, FIG. 3) is formed.

In addition, the pair of rollers 5 and 6, and the molding drum 7 are arranged in a state where roller shafts are parallel to each other. Hereinafter, a direction parallel to the roller shafts is referred to as a roller shaft direction A (see, FIG. 2).

A first roller 5 of the pair of rollers 5 and 6 is arranged to push and wind the rubber band body 22 to the outer periphery surface side of the molding drum 7 between a second roller 6 and the molding drum 7. In an example illustrated in the views, the first roller 5 pushes and attaches the rubber band body 22 on the rolling area 3 to the outer periphery surface side of the molding drum 7 according to the rotation thereof.

In addition, the pair of rollers 5 and 6, and the molding drum 7 are arranged to be movable in the roller shaft direction A.

Here, as shown in FIG. 2, a shape in a vertical cross-sectional view along the roller shaft direction A of the outer periphery surface of the first roller 5 gradually forms a convex curved surface toward the outside of the first roller 5 in a diameter direction proceeding from the outside to the center portion of the roller shaft direction A. A shape in a vertical cross-sectional view of the second roller 6 gradually forms a concave curved surface facing the inside of the second roller 6 in the diameter direction proceeding from the outside to the center portion of the roller shaft direction A. The radius of curvature of the outer periphery surface of the first roller 5 in the shape in the vertical cross-sectional view is the same as the radius of curvature of the outer periphery surface of the second roller 6 in the shape in the vertical cross-sectional view.

In addition, in the illustrated example, the sizes of the pair of the rollers 5 and 6 are equal to each other in the roller shaft direction A, and the positions of the pair of the rollers 5 and 6 match each other in the roller shaft direction A.

In each of the rollers 5 and 6, the center portion in the roller shaft direction A becomes the rolling areas 3 and 4. The rubber member 21 is supplied from the extruder 2 between the rolling areas 3 and 4 of the pair of rollers 5 and 6.

Thus, in the embodiment, the rolling area 3 of the first roller 5 is configured of a circumferential groove 8 which is formed in the outer periphery surface of the first roller 5 and extends around the entire periphery thereof. The depth of the circumferential groove 8 in both ends in the roller shaft direction A gradually reduces toward the outside from the inside of the circumferential groove 8 along the roller shaft direction A. The depth of the circumferential groove 8 is constant in a portion which is positioned between both ends in the roller shaft direction A regardless of the positions in the roller shaft direction A.

A shape in the vertical cross-sectional view of a bottom wall surface 9, which is positioned between both ends in the roller shaft direction A, of wall surfaces 9 and 10 defining the circumferential groove 8, forms an arc surface portion 11 which becomes convex toward the outside of the first roller 5 in the diameter direction. In addition, the radius of curvature of the arc surface portion 11 is the same as the radius of curvature of the outer periphery surface of the first roller 5 in the shape in the vertical cross-sectional view.

The side wall surface 10, which is positioned at both ends in the roller shaft direction A, of the wall surfaces 9 and 10 defining the circumferential groove 8, gradually extends from the inside to the outside of the circumferential groove 8 along the roller shaft direction A proceeding from the bottom wall surface 9 side to the opening side of the circumferential groove 8. The example illustrated in the view, the side wall surface 10 is gradually inclined from the inside to the outside of the circumferential groove 8 along the roller shaft direction A proceeding from inside to the outside in the radial direction of the first roller 5.

In addition, in the embodiment, engaging portions 14 and 15, which are engaged to each other and thereby movement of the rollers 5 and 6 is regulated along the roller shaft direction A, are included in the pair of rollers 5 and 6 respectively. In the example illustrated in the view, the engaging portions 14 and 15 are configured of non-rolling areas 12 and 13 which are positioned outside of the rolling areas 3 and 4 in the roller shaft direction A in the pair of rollers 5 and 6 respectively.

The non-rolling areas 12 of the first roller 5 are the respective portions positioned both outer sides of the rolling area 3 in the roller shaft direction A in the outer periphery surface of the first roller 5, and are gradually inclined to the inside of the first roller 5 in the radial direction toward the outside from the inside along the roller shaft direction A. The non-rolling area 13 of the second roller 6 is each of portions which are positioned both outside of the rolling area 4 in the roller shaft direction A in the outer periphery surface of the second roller 6, and are gradually inclined towards the outside of the second roller 6 in the radial direction toward the outside from the inside along the roller shaft direction A.

Accordingly, when the pair of rollers 5 and 6 is moved along the roller shaft direction A, the non-rolling area 12 of the first roller 5 and non-rolling area 13 of the second roller 6 are abutted to each other and thereby the movement thereof is regulated.

In addition, in the embodiment, the shape in the vertical cross-sectional view between the rolling areas 3 and 4 in between the pair of rollers 5 and 6 is for example, a profile shape of the rubber band body 22. Furthermore, a gap between contact portions with the rolling areas 3 and 4 in the non-rolling areas 12 and 13 in between the rollers 5 and 6 is for example, 0.05 to 0.2 mm, preferably 0.05 to 0.1 mm. Furthermore, the gap between non-rolling areas 12 and 13 in between the rollers 5 and 6 is for example, constant regardless of the positions in the roller shaft direction A.

Next, a production method which forms the tire configuration member 23 using the production device 1 of the tire configuration member is described.

First, the pair of rollers 5 and 6 is rotated and thereby the rubber member 21, which is extruded from the extruder 2, is supplied between the rolling areas 3 and 4 of the rollers 5 and 6. Accordingly, the rubber member 21 is rolled between both rolling areas 3 and 4, and the rubber band body 22 is formed.

After that, the pair of rollers 5 and 6 is rotated, the rubber member 21 from the extruder 2 is rolled sequentially and the rubber band body 22 is continuously formed. At the same time, the rubber band body 22 on the rolling area 3 of the first roller 5 is moved to the molding drum 7 according to the rotation of the first roller 5, and is pushed and attached to the outer periphery surface side of the molding drum 7. At this time, the pair of rollers 5 and 6, and the molding drum 7 are moved in the roller shaft direction A while rotating the molding drum 7. At the same time, the rubber band body 22 on the rolling area 3 of the first roller 5 is attached to the molding drum 7.

Thus, the rubber band body 22 is continuously attached to the outer periphery surface side of the molding drum 7. As shown in FIG. 3, the rubber band body 22 is wound spirally on the outer periphery surface side of the molding drum 7 while overlapping a portion thereof in the width direction and thereby the tire configuration member 23 is formed. In the embodiment, the rubber band body 22 is overlapped while moving the rubber band body 22 in the width direction so that an end portion 22a of the rubber ban body in the width direction configures the surface 23 a of the tire configuration member 23.

In addition, after the end portion of the rubber band body 22 is attached to the outer periphery surface of the molding drum 7, the rubber member 21, which is rolled between the rolling areas 3 and 4 of the pair of rollers 5 and 6, is rolled while being pulled due to the rotation of the molding drum 7.

As described above, according to the production device 1 of the tire configuration member and the production method of the tire configuration member using the production device 1 of the tire configuration member of the embodiment, the rolling area 3 of the first roller 5 is configured of the circumferential groove 8. Accordingly, the rubber member 21 is pushed to the side wall surface 10 during rolling of the rubber member 21 so that widening and deforming of the rubber member 21 in the roller shaft direction A can be suppressed. Accordingly, during the rolling, the rubber member 21 can be prevented from protruding to the non-rolling areas 12 and 13, and the rubber member 21 can be effectively rolled. Accordingly, even though the rotation speed of the rollers 5 and 6 is increased, the rubber band body 22 can be formed with high accuracy.

In addition, when the rotation speed of the rollers 5 and 6 is increased, the rubber member 21 is pulled and extended greatly between the extruder 2 and the rollers 5 and 6, and a cross-sectional area of the rubber member 21 in the width direction can be decreased greatly. Accordingly, an opening area of the mouthpiece 2a of the extruder 2 can be increased as much as the cross-sectional area is decreased by the extension of the rubber member 21 and pressure or temperature in the extruder 2 can be decreased. Accordingly, an improvement in the service life of the extruder 2 or a reduction in the maintenance frequency can be achieved.

In addition, as the embodiment, in the configuration in which the rubber band body 22 is wound on the outer periphery surface side of the molding drum 7, for example, like after a size change, even though the rubber member 21 is extruded from the extruder 2 at the initial start of the production of the rubber band body 22 and is not pulled by the molding drum 7, the rubber member 21 is pushed to the side wall surface 10 during rolling. Accordingly, widening and deforming of the rubber member 21 in the roller shaft direction A can be suppressed.

In addition, as the embodiment, in a case where the gap between the contact portions of the rolling areas 3 and 4 in the non-rolling areas 12 and 13 in between the pair of rollers 5 and 6 is for example, 0.05 to 0.2 mm, preferably 0.05 to 0.1 mm, rollers 5 and 6 can be smoothly rotated while the rubber member 21 is prevented from protruding to the non-rolling areas 12 and 13 on the outside surface of the rollers 5 and 6.

In other words, when the gap is smaller than 0.05 mm, the rollers 5 and 6 excessively approach each other and then the rollers 5 and 6 may not be smoothly rotated.

On the other hand, when the gap is larger than 0.2 mm, the rubber member 21 may be protruded to the non-rolling areas 12 and 13 on the outside surface of the rollers 5 and 6.

In addition, the pair of rollers 5 and 6 includes the engaging portions 14 and 15 respectively so that it is possible to regulate that the pair of rollers 5 and 6 is moved in the roller shaft direction A during rolling of the rubber member 21, and the advantage described above can be reliably obtained.

Thus, as described above, even though the rotation speed of the rollers 5 and 6 is increased, the rubber band body 22 can be formed with high accuracy so that the tire configuration member 23 can be formed with high accuracy and air remaining in the tire configuration member 23 can be suppressed.

In addition, the rolling area 3 of the first roller 5 includes the arc surface portion 11, so that the rubber band body 22 on the rolling area 3 of the first roller 5 can be firmly pushed and wound on the outer periphery surface side of the molding drum 7 by the arc surface portion 11. Accordingly, even though the air enters between the rubber band body 22 and the outer periphery surface side of the molding drum 7, the rubber band body 22 can be wound on the outer periphery surface side of the molding drum 7 while the air is reliably removed.

Here, in the embodiment, the side wall surface 10 is gradually extended from the inside to the outside of the circumferential groove 8 along the roller shaft direction A from the bottom wall surface 9 side toward the opening side of the circumferential groove 8 so that the depth of the circumferential groove 8 at both ends in the roller shaft direction A is gradually decreased toward the outside from the inside of the circumferential groove 8 along the roller shaft direction A. Accordingly, the thickness of both ends 22a in the width direction is gradually decreased proceeding outside in the width direction and the rubber band body 22 without steps at both ends 22a can be formed.

Accordingly, as the embodiment, the rubber band body 22 formed described above is wound spirally on the outer periphery surface side of the molding drum 7 while a portion thereof in the width direction is overlapped so that when the tire configuration member 23 is formed, the tire configuration member 23 can be formed with high accuracy.

In other words, as shown in FIG. 3, the rubber band body 22 is configured such that the thickness of both ends 22a in the width direction is gradually decreased proceeding outside in the width direction and both ends 22a are formed without steps. Thus, the rubber band body 22 is overlapped while moving in the width direction so that one end 22a of the rubber band body 22 in the width direction configures the surface 23a of the tire configuration member 23. Accordingly, a step can be suppressed from being generated on the surface 23a of the tire configuration member 23 for example, compared to a case where the thickness of the rubber band body is constant regardless of the positions in the width direction or to a case where the step is present at the end portion of the rubber band body in the width direction.

Thus, the tire is formed of the tire configuration member 23 which is formed with high accuracy as described above so that air remaining in the tire can be reliably suppressed.

In addition, the technical range of the invention is not limited to the embodiment described above and various changes can be applied in the range that does not deviate from the scope of the invention.

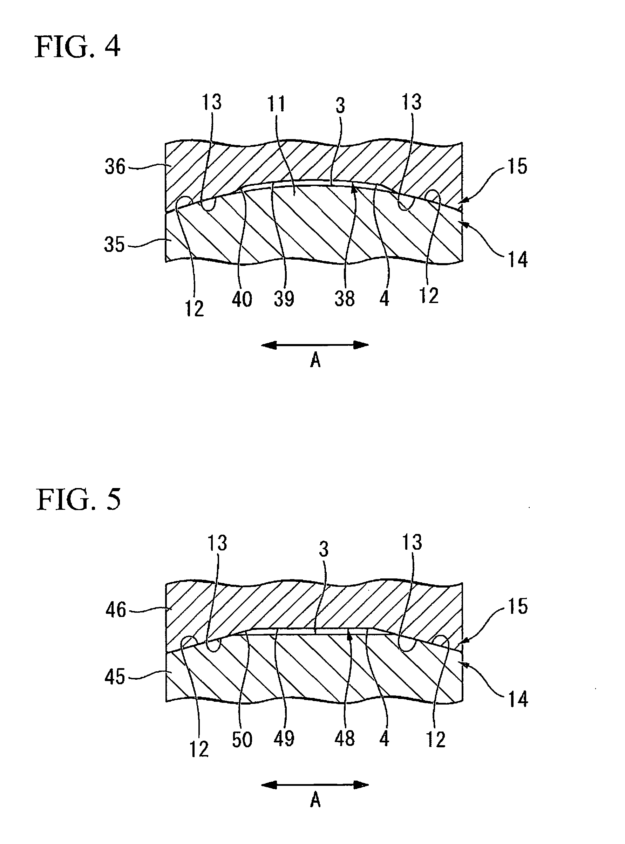

For example, in the embodiment described above, the rolling area 3 of the first roller 5 is configured of the circumferential groove 8, however, the invention is not limited to this configuration. As shown in FIG. 4, the rolling area 4 of a second roller 36 may be configured of a circumferential groove 38.

In addition, in the pair of rollers 35 and 36 illustrated in FIG. 4, a shape in the vertical cross-sectional view of a bottom wall surface 39 defining the circumferential groove 38 gradually forms a concave curved surface facing the inside of the second roller 36 in a diameter direction proceeding from the outside to the center portion of the roller shaft direction A. In addition, the radius of curvature of the bottom wall surface 39 is the same as the radius of curvature of the outer periphery surface of the second roller 36 in the shape in the vertical cross-sectional view.

In addition, a side wall surface 40 defining the circumferential groove 38 is gradually inclined toward the outside from the inside of the circumferential groove 38 along the roller shaft direction A toward the outside from the inside of the second roller 36 in the diameter direction.

In addition, the rolling area 3 of the first roller 35 is configured of the center portion of the outer periphery surface of the first roller 35. Thus, the center portion thereof is the arc surface portion 11 in which the shape thereof in the vertical cross-sectional view becomes convex toward the outside of the first roller 35 in the diameter direction.

In addition, in the embodiment described above, the rolling areas 3 and 4 of one of the pair of rollers 5, 6, 35 and 36 is configured of the circumferential grooves 8 and 38, however, the invention is not limited to this configuration and any of the rolling areas of both rollers may be configured of the circumferential groove. In other words, the rolling area of at least one of the pair of rollers may be configured of the circumferential groove.

In addition, in the embodiment described above, the rolling area 3 of the first rollers 5 and 35 includes the arc surface portion 11, however, the configuration of the rolling area 3 is not limited to this configuration.

For example, in the pair of rollers 45 and 46 illustrated in FIG. 5, the rolling area 3 of the first roller 45 is configured of the center portion of the first roller 45 in the outer periphery surface thereof in the roller shaft direction A. Thus, the shape of the center portion in the vertical cross-sectional view is a plane surface shape extending in the roller shaft direction A.

In addition, in outer periphery surface of the first roller 45, the shape in the vertical cross-sectional view of each portion which is positioned at both outer sides of the center portion in the roller shaft direction A is a gradually inclined surface shape facing the inside of the first roller 45 in the diameter direction toward the outside from the inside in the roller shaft direction A.

In addition, the circumferential groove 48 is formed at the center portion of the second roller 46 in the outer periphery surface in the roller shaft direction A. In addition, in the outer periphery surface of the second roller 46, the shape in the vertical cross-sectional view of each outside portion which is positioned at both outer sides of the center portion in the roller shaft direction A is a gradually inclined surface shape toward the outside of the second roller 46 in the diameter direction toward the outside from the inside in the roller shaft direction A.

Thus, the shape in the vertical cross-sectional view of the bottom wall surface 49 defining the circumferential groove 48 is a plane surface shape along the roller shaft direction A, and the shape in the vertical cross-sectional view of the side wall surface 50 defining the circumferential groove 48 is the inclined surface shape the same as each outside portion described above.

In addition, in the embodiment described above, the engaging portions 14 and 15 are configured of non-rolling areas 12 and 13, however, the invention is not limited to this configuration. For example, the pair of rollers 5 and 6 illustrated in FIG. 2, may employ the engaging portion which includes an engaging protrusion protruding from the center portion of the second roller 6 in the outer periphery surface in the roller shaft direction A to inside the circumferential groove 8.

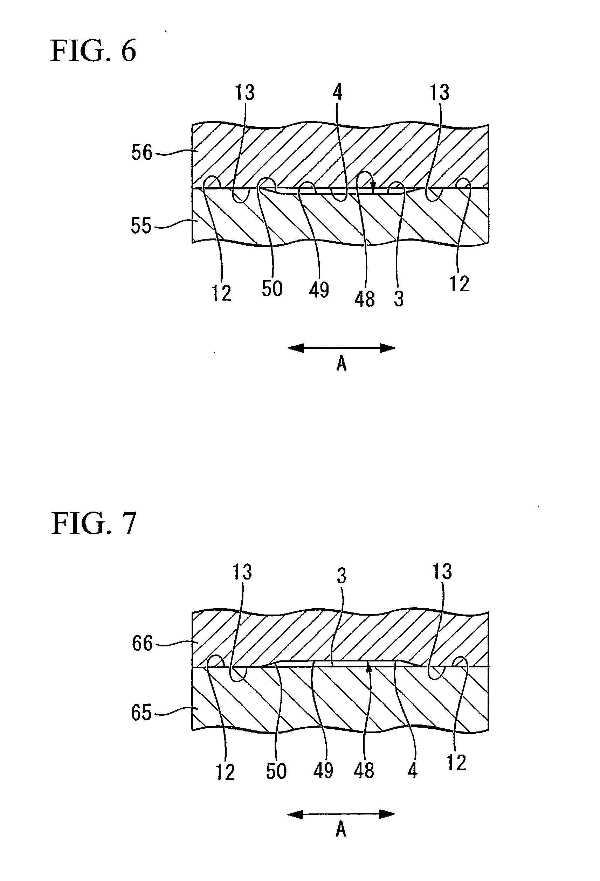

Furthermore, as shown in FIGS. 6 and 7, the engaging portions 14 and 15 may be omitted.

In the pair of rollers 55 and 56 illustrated in FIG. 6, the shapes in the vertical cross-sectional view of the outer periphery surfaces of the first roller 55 and the second roller 56 are plane surface shapes respectively along the roller shaft direction A, and the rolling area 3 of the first roller 55 is configured of the circumferential groove 48. In the pair of rollers 65 and 66 illustrated in FIG. 7, the shapes in the vertical cross-sectional view of the outer periphery surfaces of the first roller 65 and the second roller 66 are plane surface shapes respectively along the roller shaft direction A, and the rolling area 4 of the second roller 66 is configured of the circumferential groove 48.

In addition, in the embodiments described above, the side wall surfaces 10, 40 and 50 defining the circumferential grooves 8, 38, and 48 are gradually extended from the inside toward the outside of the circumferential groove 8, 38, and 48 along the roller shaft direction A proceeding from the bottom wall surfaces 9, 39, and 49 to the opening side of the circumferential groove 8, 38, and 48, however, the invention is not limited to this configuration. For example, the side wall surface may be extended along the diameter direction of the roller or may be gradually extended from outside toward inside of the circumferential groove along the roller shaft direction proceeding from the bottom wall surface side to the opening side of the circumferential groove.

In addition, in the embodiments described above, the first rollers 5, 35, 45, 55, and 65 are configured to wind the rubber band body 22 on the molding drum 7, however, the invention is not limited to this configuration. For example, a winding roller is provided which is different from the first rollers 5, 35, 45, 55, and 65, and the winding roller may wind the rubber band body 22 on the molding drum 7.

In addition, before the tire configuration member 23 is formed on the molding drum 7 in the production device 1, another tire configuration member is formed on the outer periphery surface of the molding drum 7 beforehand, and the rubber band body 22 formed in the production device 1 may be wound on the outer periphery surface of the molding drum 7 on which the other tire configuration member is formed.

In addition, in the embodiments described above, the pair of rollers 5 and 6, and the molding drum 7 are arranged movable in the roller shaft direction A, however, the invention is not limited to this configuration.

Furthermore, in the embodiments described above, the rubber band body 22 is wound spirally on the outer periphery surface of the molding drum 7 while overlapping a portion thereof in the width direction and thereby the tire configuration member 23 is formed, however, the invention is not limited to this configuration.

For example, the rubber band body 22 may not be wound while overlapping a portion thereof in the width direction, and the rubber band body 22 may not be wound spirally. Furthermore, for example, the invention may be applied to a production device of a winding member of the rubber band body in which a winding reel (a wound roller), which is rotatably supported, may be employed instead of the molding drum 7, and the rubber band body 22 is wound on the winding reel and thereby the winding member of the rubber band body is formed.

In addition, the invention may also be applied to a production device of a rubber band body which does not include a wound roller such as the molding drum and the winding reel, and to a production method of the rubber band body which forms the rubber band body using a production device of the rubber band body.

In addition, it is possible to appropriately replace the constituent elements in the embodiments described above with well-known constituent elements and further appropriately combine the modification examples described above within a range which does not deviate from the scope of the invention.

### Industrial Applicability

According to the invention, the rubber band body can be formed with high accuracy even though the rotation speed of the roller is increased.

### Reference Signs List

- A: roller shaft direction
- 1: production device of tire configuration member (production device of winding member of rubber band body)
- 2: extruder
- 2a: mouthpiece
- 3, 4: rolling area
- 5, 6, 35, 36, 45, 46, 55, 56, 65, 66: roller
- 7: molding drum
- 8, 38, 48: circumferential groove
- 11: arc surface portion
- 14, 15: engaging portion
- 21: rubber member
- 22: rubber band body
- 23: tire configuration member

## Claims

1. A production device (1) of a winding member of a rubber band body (22) comprising:
a production device of a rubber band body (22) comprising:
an extruder (2); and
a pair of rollers (5, 6) for rolling a rubber member (21) from the extruder (2) between rolling areas (3,4) of rollers (5, 6) to form a rubber band body (22),
wherein a rolling area (3,4) of at least one of the pair of rollers (5, 6) is configured by a circumferential groove (8) formed in the outer surface of the roller (5) and the circumferential groove (8) extends over the whole circumference of the roller (5),
a molding drum (7) which is rotatably supported for winding the rubber band body (22) on the outer periphery surface side thereof for forming a winding member of the rubber band body (22), and
the pair of rollers (5,6) is configured by a first roller (5) and a second roller (6),
the first roller (5) is arranged between the second roller (6) and the molding drum (7), **characterized in that**
the circumferential groove (8) is formed in the outer surface of the first roller (5) and extending over the whole circumference of the first roller (5).

2. The production device of a winding member of the rubber band body (22) according to claim 1,
wherein a side wall surface (10) which is positioned at both ends in a roller shaft direction (A), among wall surfaces (9, 10) defining the circumferential groove (8), gradually extends from inside to outside of the circumferential groove (8) along the roller shaft direction (A), proceeding from a bottom wall surface (9) side towards an opening side of the circumferential groove (8).

3. The production device of a winding member of the rubber band body (22) according to claim 1 or 2, further comprising:
engaging portions (14, 15) provided in the pair of rollers (5, 6) separately, which engage each other and regulate a movement of the rollers (5, 6) along the roller shaft direction (A).

4. A production method of a winding member of the rubber band body (22) comprising:
rolling a rubber member (21) which is extruded from an extruder (2) to form a rubber band body (22); and
forming the rubber band body (22) using the production device of a winding member of the rubber band body (22) according to claim 1.

5. The production device (1) of a winding member of a rubber band body (22) according to claim 1,
wherein one roller in the pair of rollers (5, 6) is arranged between the other roller and the molding drum (7) to push and wind the rubber band body (22) on the outer periphery surface side of the molding drum (7), and
the rolling area (3,4) of the one roller includes an arc surface portion of which a shape in a vertical cross-sectional view along the roller shaft direction (A) is convex to outside of the one roller in the diameter direction.

6. The production device (1) of a winding member of a rubber band body (22) according to claim 1 or 5,
wherein the pair of rollers (5, 6) and the molding drum (7) are arranged to be movable in the roller shaft direction (A), and
the rubber band body (22) is wound spirally on the outer periphery surface side of the molding drum (7) while overlapping a portion thereof in the width direction to form a tire configuration member.

7. A production method of a winding member of a rubber band body (22) comprising:
forming a winding member of a rubber band body (22) by winding the rubber band body (22) on the outer periphery surface side of the molding drum (7) after rolling a rubber member (21) extruded from an extruder (2) and forming the rubber band body (22); and
forming the winding member of the rubber band body (22) using the production device (1) of a winding member of a rubber band body (22) according to claim 1, 5 or 6.

## Patentansprüche

1. Vorrichtung (1) zur Herstellung eines gewundenen Elementes eines Gummibandkörpers (22), die aufweist:
eine Vorrichtung zur Herstellung eines Gummibandkörpers (22), die aufweist:
einen Extruder (2); und
ein Paar Walzen (5, 6) für das Walzen eines Gummielementes (21) vom Extruder (2) zwischen den Walzbereichen (3, 4) der Walzen (5, 6), um einen Gummibandkörper (22) zu formen,
wobei ein Walzbereich (3, 4) von mindestens einer des Paares der Walzen (5, 6) durch eine periphere Rille (8) ausgebildet wird, die in der Außenfläche der Walze (5) geformt wird, und wobei sich die periphere Rille (8) über den gesamten Umfang der Walze (5) erstreckt;
eine Formtrommel (7), die drehbar für ein Winden des Gummibandkörpers (22) auf der Seite der äußeren Umfangsfläche davon für das Bilden eines gewundenen Elementes des Gummibandkörpers (22) getragen wird, und wobei
das Paar Walzen (5, 6) durch eine erste Walze (5) und eine zweite Walze (6) gebildet wird,
wobei die erste Walze (5) zwischen der zweiten Walze (6) und der Formtrommel (7) angeordnet ist, **dadurch gekennzeichnet, dass**
die periphere Rille (8) in der Außenfläche der ersten Walze (5) gebildet wird und sich über den gesamten Umfang der ersten Walze (5) erstreckt.

2. Vorrichtung zur Herstellung eines gewundenen Elementes des Gummibandkörpers (22) nach Anspruch 1,
bei der sich eine Seitenwandfläche (10), die an beiden Enden in einer Walzenwellenrichtung (A) zwischen den Wandflächen (9, 10), die die periphere Rille (8) definieren, positioniert ist, allmählich von der Innenseite zur Außenseite der peripheren Rille (8) entlang der Walzenwellenrichtung (A) erstreckt, wobei sie von einer Seite einer Bodenwandfläche (9) in Richtung einer Öffnungsseite der peripheren Rille (8) fortschreitet.

3. Vorrichtung zur Herstellung eines gewundenen Elementes des Gummibandkörpers (22) nach Anspruch 1 oder 2, die außerdem aufweist:
Eingriffsabschnitte (14, 15), die im Paar der Walzen (5, 6) separat vorhanden sind, die miteinander in Eingriff kommen und die Bewegung der Walzen (5, 6) längs der Walzenwellenrichtung (A) regulieren.

4. Verfahren zur Herstellung eines gewundenen Elementes des Gummibandkörpers (22), das die folgenden Schritte aufweist:
Walzen eines Gummielementes (21), das aus einem Extruder (2) extrudiert wird, um einen Gummibandkörper (22) zu formen; und
Formen des Gummibandkörpers (22) bei Benutzung der Vorrichtung zur Herstellung eines gewundenen Elementes des Gummibandkörpers (22) nach Anspruch 1.

5. Vorrichtung (1) zur Herstellung eines gewundenen Elementes eines Gummibandkörpers (22) nach Anspruch 1,
bei der eine Walze im Paar der Walzen (5, 6) zwischen der anderen Walze und der Formtrommel (7) angeordnet ist, um den Gummibandkörper (22) auf die Seite der äußeren Umfangsfläche der Formtrommel (7) zu drücken und zu winden, und
wobei der Walzbereich (3, 4) der einen Walze einen Bogenflächenabschnitt umfasst, bei dem eine Form in einer vertikalen Schnittdarstellung längs der Walzenwellenrichtung (A) konvex zur Außenseite der einen Walze in der Durchmesserrichtung ist.

6. Vorrichtung (1) zur Herstellung eines gewundenen Elementes eines Gummibandkörpers (22) nach Anspruch 1 oder 5,
bei dem das Paar der Walzen (5, 6) und die Formtrommel (7) so angeordnet sind, dass sie in der Walzenwellenrichtung (A) beweglich sind, und wobei
der Gummibandkörper (22) spiralförmig auf der Seite der äußeren Umfangsfläche der Formtrommel (7) gewunden wird, während sich ein Abschnitt davon in der Breitenrichtung überlappt, um ein Reifenkonfigurationselement zu bilden.

7. Verfahren zur Herstellung eines gewundenen Elementes eines Gummibandkörpers (22), das die folgenden Schritte aufweist:
Formen eines gewundenen Elementes eines Gummibandkörpers (22) durch Winden des Gummibandkörpers (22) auf der Seite der äußeren Umfangsfläche der Formtrommel (7), nachdem ein aus einem Extruder (2) extrudiertes Gummielement (21) gewalzt wurde, und Bilden des Gummibandkörpers (22); und
Formen des gewundenen Elementes des Gummibandkörpers (22) bei Benutzung der Vorrichtung (1) zur Herstellung eines gewundenen Elementes eines Gummibandkörpers (22) nach Anspruch 1, 5 oder 6.

## Revendications

1. Dispositif de production (1) d'un élément d'enroulement d'un corps de bracelet en caoutchouc (22), comprenant :
un dispositif de production d'un corps de bracelet en caoutchouc (22) comprenant :
une extrudeuse (2) ; et
une paire de rouleaux (5, 6) permettant de faire rouler un élément en caoutchouc (21) à partir de l'extrudeuse (2) entre des zones de roulage (3, 4) de rouleaux (5, 6) afin de former un corps de bracelet en caoutchouc (22),
dans lequel une zone de roulage (3, 4) d'au moins un parmi la paire de rouleaux (5, 6) est configurée avec une rainure circonférentielle (8) formée dans la surface extérieure du rouleau (5) et la rainure circonférentielle (8) s'étend sur la totalité de la circonférence du rouleau (5),
un tambour de moulage (7) qui est supporté rotatif pour un enroulement du corps de bracelet en caoutchouc (22) sur le côté surface périphérique extérieure de celui-ci afin de former un élément d'enroulement du corps de bracelet en caoutchouc (22), et
la paire de rouleaux (5, 6) est configurée avec un premier rouleau (5) et un second rouleau (6),
le premier rouleau (5) est agencé entre le second rouleau (6) et le tambour de moulage (7), **caractérisé en ce que**
la rainure circonférentielle (8) est formée dans la surface extérieure du premier rouleau (5) et s'étend sur la totalité de la circonférence du premier rouleau (5).

2. Dispositif de production d'un élément d'enroulement du corps de bracelet en caoutchouc (22) selon la revendication 1,
dans lequel une surface de paroi latérale (10) qui est positionnée aux deux extrémités dans une direction d'axe de rouleau (A), parmi des surfaces de paroi (9, 10) définissant la rainure circonférentielle (8), s'étend progressivement de l'intérieur vers l'extérieur de la rainure circonférentielle (8) le long de la direction d'axe de rouleau (A), en allant d'un côté surface (9) de paroi de fond en direction d'un côté ouverture de la rainure circonférentielle (8).

3. Dispositif de production d'un élément d'enroulement du corps de bracelet en caoutchouc (22) selon la revendication 1 ou 2, comprenant en outre une étape consistant à :
mettre en prise des parties (14, 15) fournies dans la paire de rouleaux (5, 6) séparément, qui viennent en prise l'une avec l'autre et régulent un mouvement de rouleaux (5, 6) le long de la direction d'axe de rouleau (A).

4. Procédé de production d'un élément d'enroulement du corps de bracelet en caoutchouc (22), comprenant les étapes consistant à :
faire rouler un élément en caoutchouc (21) qui est extrudé à partir d'une extrudeuse (2) afin de former un corps de bracelet en caoutchouc (22) ; et
former le corps de bracelet en caoutchouc (22) en utilisant le dispositif de production d'un élément d'enroulement du corps de bracelet en caoutchouc (22) selon la revendication 1.

5. Dispositif de production (1) d'un élément d'enroulement d'un corps de bracelet en caoutchouc (22) selon la revendication 1,
dans lequel un rouleau de la paire de rouleaux (5, 6) est agencé entre l'autre rouleau et le tambour de moulage (7) afin de pousser et enrouler le corps de bracelet en caoutchouc (22) sur le côté surface périphérique extérieure du tambour de moulage (7), et
la zone de roulage (3, 4) dudit un rouleau comprend une partie surface en arc dont une forme en vue transversale verticale le long de la direction d'axe de rouleau (A) est convexe vers l'extérieur dudit un rouleau dans la direction diamétrale.

6. Dispositif de production (1) d'un élément d'enroulement d'un corps de bracelet en caoutchouc (22) selon la revendication 1 ou 5,
dans lequel la paire de rouleaux (5, 6) et le tambour de moulage (7) sont agencés pour être mobiles dans la direction d'axe de rouleau (A), et
le corps de bracelet en caoutchouc (22) est enroulé en spirale sur le côté surface périphérique extérieure du tambour de moulage (7) tout en chevauchant une partie de celui-ci dans la direction de largeur afin de former un élément de configuration de pneumatique.

7. Procédé de production d'un élément d'enroulement d'un corps de bracelet en caoutchouc (22), comprenant les étapes consistant à :
former un élément d'enroulement d'un corps de bracelet en caoutchouc (22) par enroulement du corps de bracelet en caoutchouc (22) sur le côté surface périphérique extérieure du tambour de moulage (7) après roulage d'un élément en caoutchouc (21) extrudé à partir d'une extrudeuse (2) et formage du corps de bracelet en caoutchouc (22) ; et
former l'élément d'enroulement du corps de bracelet en caoutchouc (22) en utilisant le dispositif de production (1) d'un élément d'enroulement d'un corps de bracelet en caoutchouc (22) selon l'une quelconque des revendications 1, 5 ou 6.
